# EUROPEAN PATENT APPLICATION

(11) **EP 1 764 801 A2**
(43) Date of publication of application: **21.03.2007**
(21) Application number: 06254679.1
(22) Date of filing: 08.09.2006
(51) Int. Cl.: G11B 33/12, G11B 17/04

(54) **Disk recording and/or reproducing device**

(30) Priority: 14.09.2005 JP 2005266735; 12.06.2006 JP 2006161933
(71) Applicant: ORION ELECTRIC CO., Ltd., Fukui 915-8555 (JP)
(72) Inventor: Makino, Takeshi, c/o Intellectual Property Dept., Echizen-city Fukui 915-8555 (JP)
(74) Representative: Paget, Hugh Charles Edward

(57) **Abstract**

The invention provides a disk device which reads and/or write a signal from/to a disk medium designed to realize dust proofing and reduction in thickness and at the same time designed to reduce the number of parts and improving work efficiency. Bent parts 232 of a top plate 23 formed by bending both side ends so as to have a substantially L-shaped cross section are engaged with engagement grooves 211a formed in a top end face of a side wall 211 of a frame 21 to improve a dust proofing characteristic of a disk device 2 and the top plate 23 is provided with a clamper 25, and therefore it is possible to eliminate the necessity for a separate clamper supporting member, reduce the number of parts and improve work efficiency.

## Description

### BACKGROUND OF THE INVENTION

### Field of the Invention

The present invention relates to a disk device which reads and/or writes a signal from/to a disk medium, and more particularly, to a disk device designed to realize dust proofing and reduction in thickness.

### Description of the Related Art

Disk media represented by CD and DVD are widely used for reasons such as ease of handling and various electronic devices (e.g., television and personal computer incorporating a DVD or the like) using a disk device which performs recording/replaying to/from these disk media are also widely spread. Furthermore, these electronic devices are becoming smaller and slimmer year after year.

In such a disk device which performs reading/writing from/to optical media such as DVD, if, for example, dust enters its optical head, an adverse influence may be caused on the recording/replaying operation, and therefore dust proofing measures are taken to prevent invasion of dust. Conventional technologies about such dust proofing measures for disk devices are disclosed in Japanese Patent Laid-Open Publications No.7-272473, No.9-326192 and No.10-21679 (Patent Documents 1 to 3) or the like. Furthermore, conventional technologies about a reduction in the number of parts of a disk device and simplification of assembly processes are disclosed in Japanese Patent Laid-Open Publications No.2001-222877 and No.2003-317461 (Patent Documents 4, 5) or the like. Furthermore, Japanese Patent Laid-Open Publications No.2001-222847 and No.2002-352449 (Patent Documents 6, 7) or the like disclose a technology for preventing a disk medium from being left behind inside a device.

The conventional technologies disclosed by the above described Patent Documents are basically designed to house a frame in which a pickup unit and disk drive device or the like are mounted in a box-type cabinet, require a step of attaching the frame in the box-type cabinet and require the box-type cabinet (basically constructed of two parts; upper cabinet and lower cabinet) in addition to the frame, which leads to an increase in the number of parts corresponding thereto.

### SUMMARY OF THE INVENTION

In view of the above described problems, it is an object of the present invention to provide a disk device which reads and/or writes a signal from/to a disk medium designed to realize dust proofing and reduction in thickness and at the same time designed to reduce the number of parts and number of working steps, capable of preventing the disk medium from being left behind inside the disk device when the disk medium is ejected.

The disk device according to aspect 1 is a disk device which reads and/or writes a signal from/to a disk medium comprising a top plate member which is provided with continuous or intermittent engagement grooves in top end faces of side walls of a frame constituting an enclosure of the disk device and which covers a top surface of the disk device, wherein bent parts of the top plate member formed by bending the whole or part of both side ends so as to have a substantially L-shaped cross section are engaged with the engagement grooves to thereby cover the top surface of the device with the top plate member.

According to the above described configuration, the area where the frame making up the enclosure of the disk device and the top plate member are connected is constructed of the grooves (engagement grooves) engaged with the projections (bent parts) and the frame and top plate member together form the disk device into a box shape.

The disk device according to aspect 2 is the disk device according to aspect 1, wherein a stepped recess swelling out toward a turn table which drives to rotate a disk medium provided for the disk device is formed in an area of the top plate member facing the turn table, a support hole for supporting a clamper for holding the disk medium sandwiched with the turn table is provided in the stepped recess and the clamper is fitted into the support hole.

According to the above described configuration, the clamper for holding the disk medium is held by the top plate member.

The disk device according to aspect 3 is the disk device according to aspect 1 or 2, wherein lugs protruding outward from the bottom ends of the bent parts are formed in parts of the bent parts, insertion holes for screws are formed in the lugs and boss sections are formed in the side walls of the frame so as to face the insertion holes and the top plate member is thereby fixed to the frame using screws.

According to the above described configuration, the top plate member is fixed to the frame using screws.

The disk device according to aspect 4 is the disk device according to aspect 2 or 3, wherein the stepped recess is formed such that the clamper does not protrude from the top surface of the top plate member or the lugs and the boss sections are formed such that heads of the screws do not protrude from the top surface of the top plate member.

According to the above described configuration, the clamper or screws for fixing the top plate member to the frame do not protrude from the top surface of the top plate member.

The disk device according to aspect 5 is the disk device according to any one of aspects 1 to 4, wherein when the side of the disk device on which the disk medium is inserted/ejected is assumed to be the front side of the device, projections swelling out toward the disk medium are formed at positions on the top plate member closer to the back than a part facing the disk medium when the disk medium is in a replaying position inside the disk device.

According to the above described configuration, the projections are formed in parts of the inner surface side (side on which the disk medium is placed) of the top plate member closer to the back (back viewed from the disk insertion side) than the part facing the disk medium in the replaying position.

The disk device according to aspect 6 is the disk device according to any one of aspects 1 to 5, wherein the top plate member is made of an elastic member and when a distance between the inner side wall surface of the engagement groove formed in one side wall top end face of the frame and the inner side wall surface of the engagement groove formed in the other side wall top end face is assumed to be a first distance, the device is constructed such that a distance between the bottom end of the bent part formed at one side end of the top plate member and the bottom end of the bent part formed at the other side end is shorter than the first distance and at the same time a distance between both side ends of the top plate member is longer than the first distance.

According to the above described configuration, the distance between both bottom ends of the bent parts formed at both side ends of the top plate member is shorter than the distance (first distance) between both engagement grooves formed on both side walls of the frame and the distance between both side ends of the top plate member is longer than the distance (first distance) between both engagement grooves formed on both side walls of the frame.

The disk device according to aspect 7 is a disk device which reads and/or writes a signal from/to a disk medium comprising a frame which constitutes an enclosure of the disk device, a top plate member which covers the whole or part of the top surface of the disk device and a disk tray for mounting the disk medium provided so as to be slidable on the frame, wherein when the side on which the disk medium is inserted or ejected is assumed to be the front side of the device, disk position control projections protruding toward the disk medium and having a slope to guide the disk medium toward the disk tray when contacting the disk medium are formed at positions of the top plate member closer to the back than an area facing the disk medium when the disk medium is in a replaying position inside the disk device and disk medium stoppers are formed at positions closer to the back than positions facing the disk position control projections on the disk medium mounting surface side of the disk tray.

According to the above described configuration, the disk position control projections having the slope to guide the disk medium toward the disk tray when contacting the disk medium are formed in parts on the inner surface side (side on which the disk medium is placed) of the top plate member closer to the back (back viewed from the disk insertion side) than the area facing the disk medium in the replaying position and the disk medium stoppers are formed on the disk tray at positions closer to the back than the positions facing the disk position control projections.

The disk device according to aspect 8 is the disk device according to any one of aspects 1 to 6, further comprising a disk tray for mounting the disk medium provided so as to be slidable on the frame, wherein when the side on which the disk medium is inserted or ejected is assumed to be the front side of the device, disk position control projections protruding toward the disk medium and having a slope to guide the disk medium toward the disk tray when contacting the disk medium are formed at positions of the top plate member closer to the back than an area facing the disk medium when the disk medium is in a replaying position inside the disk device and disk medium stoppers are formed at positions closer to the back than positions facing the disk position control projections on the disk medium mounting surface side of the disk tray.

The disk device according to aspect 9 is the disk device according to aspect 7 or 8, wherein a height position of an end of the disk position control projection is made to be substantially identical to a height position of an end of the disk medium stopper or the height position of the end of the disk position control projection is made to be closer to the disk tray than the height position of the end of the disk medium stopper.

According to the above described configuration, the height position of the end of the disk position control projection is closer to the disk tray than the height position of the end of the disk medium stopper or substantially identical thereto. That "the height position of the end of the disk position control projection is closer to the disk tray than the height position of the end of the disk medium stopper" means in other words that "the height position of the end of the disk medium stopper is closer to the top plate member than the height position of the end of the disk position control projection."

The disk medium replaying device or disk medium recording/replaying device according to aspect 10 comprises the disk device according to any one of aspects 1 to 9.

### BRIEF DESCRIPTION OF THE DRAWINGS

FIG. 1 is a perspective view schematically showing a DVD player with its top plate removed;
FIG. 2 is a perspective view schematically showing a disk device with a disk tray ejected;
FIG. 3 is a perspective view schematically showing the disk device with a disk tray inserted;
FIG. 4A to 4C are views schematically showing the disk device; FIG. 4A is a plan view, FIG. 4B is a side view and FIG. 4C is a front view;
FIG. 5 is a perspective view schematically showing the disk device with the top plate removed;
FIG. 6A and 6B are schematic views of the top plate; FIG. 6A is an exploded perspective view with a clamper removed and FIG. 6B is a perspective view viewed from the bottom with no clamper attached;
FIG. 7A to 7C are schematic views of the top plate; FIG. 7A is a plan view, FIG. 7B is a side view and FIG. 7C is a front view;
FIG. 8 is a cross sectional view along a line A-A in FIG. 3;
FIG. 9 is a cross sectional view along a line B-B in FIG. 3;
FIG. 10 is a perspective view schematically showing another disk device with the top plate removed;
FIG. 11 is a perspective view showing a cover member which covers a stepped recess of the top plate;
FIG. 12 is a view schematically illustrating the top plate with the bending angle of the bent parts slightly increased;
FIG. 13 is a perspective view schematically showing a disk device according to Embodiment 2 with the top plate removed;
FIG. 14A to 14C are schematic views of the top plate according to Embodiment 2; FIG. 14A is an exploded perspective view with the clamper removed, FIG. 14B is a perspective view viewed from the bottom with the clamper not attached and FIG. 14C is a cross sectional view of a disk position control projection 1311;
FIG. 15A to 15C are schematic views of the top plate of Embodiment 2; FIG. 15A is a plan view, FIG. 15B is a side view and FIG. 15C is a front view;
FIG. 16 is a schematic cross sectional view of the disk device of Embodiment 2;
FIG. 17 is a schematic explanatory view illustrating the operation of the disk device of Embodiment 2 when the disk tray is ejected (when disk medium is ejected);
FIG. 18 is a view showing another disk medium stopper;
FIG. 19 is a perspective view schematically showing another disk device when the disk tray is inserted;
FIG. 20A and 20B are schematic views of another top plate; FIG. 20A is a plan view and FIG. 20B is a side view; and
FIG. 21 is a schematic explanatory view illustrating another disk device when the disk tray is ejected (when disk medium is ejected).

### DETAILED DESCRIPTION OF THE PREFERRED EMBODIMENTS

Hereinafter, specific examples of the present invention will be explained with reference to the attached drawings. The following embodiments are some aspects in implementing the present invention and are not intended to confine the present invention within the range thereof.

### [Embodiment 1]

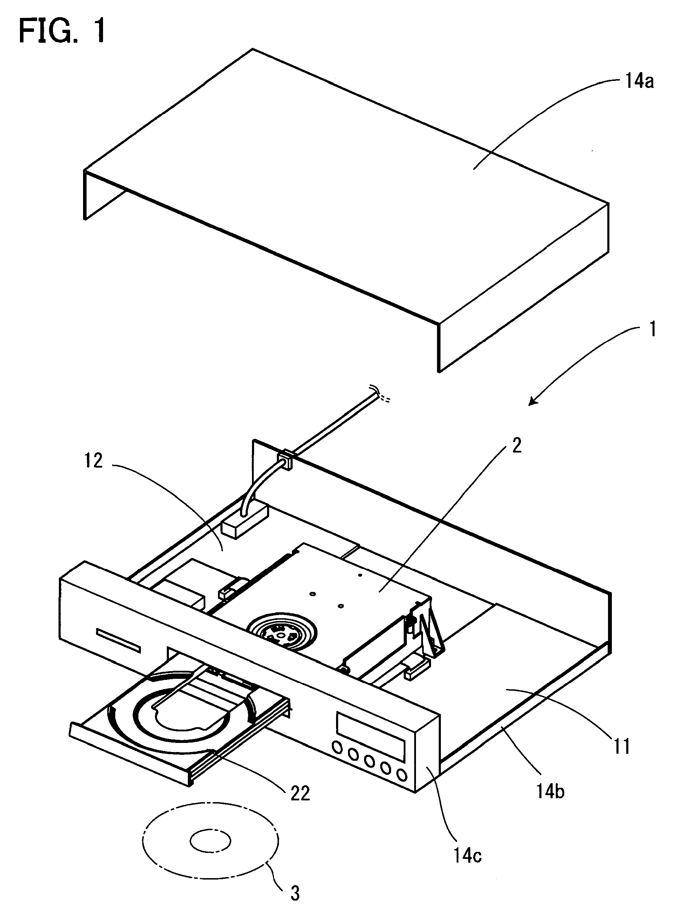

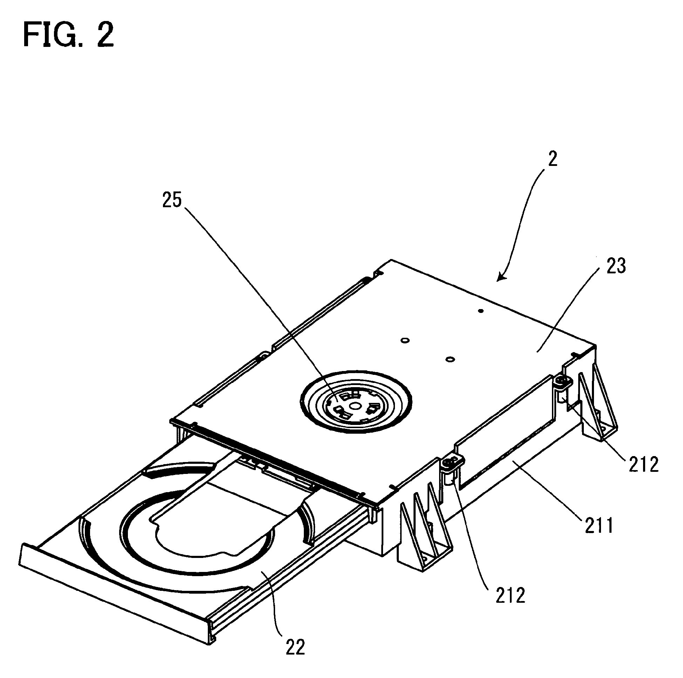

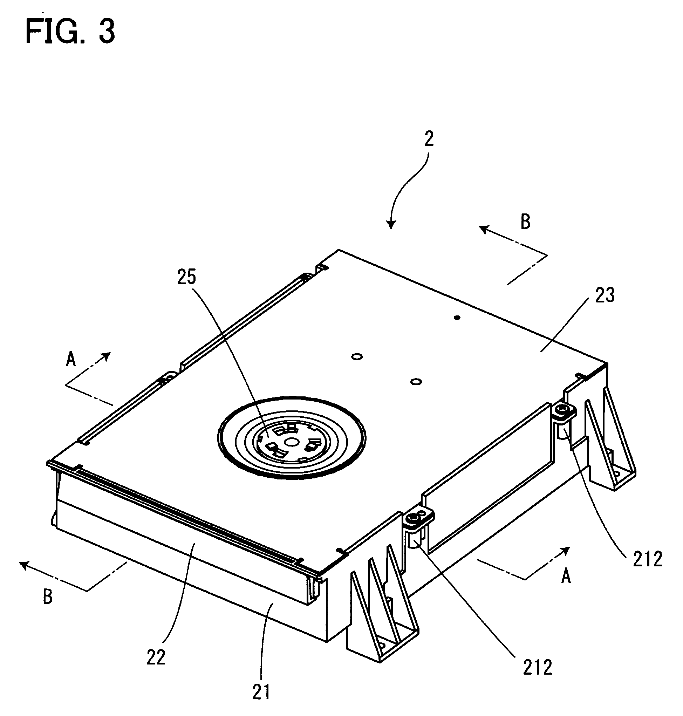

FIG. 1 is a perspective view schematically showing a DVD player according to the present invention with its top plate removed, FIG. 2 and FIG. 3 are perspective views schematically showing a disk device provided for the DVD player (FIG. 2 shows the disk device with a disk tray ejected and FIG. 3 shows the disk device with the disk tray inserted).

As shown in FIG. 1, the DVD player 1 which is a replaying device for a disk medium (DVD) includes a main substrate 11 provided with a video/audio signal processing section which processes a video signal or audio signal and a control section which controls the entire device, a power supply substrate 12 which is formed independently of the main substrate 11, a DVD replaying unit (disk device) 2 which reads signals from a disk medium (DVD) 3 in an enclosure 14 (top plate 14a, chassis 14b and front panel 14c).

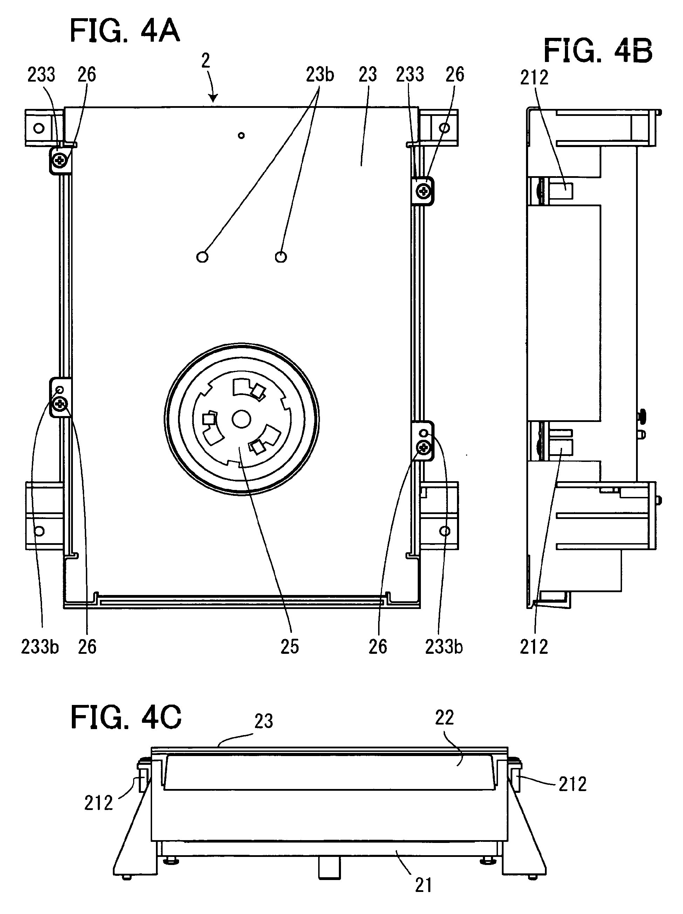

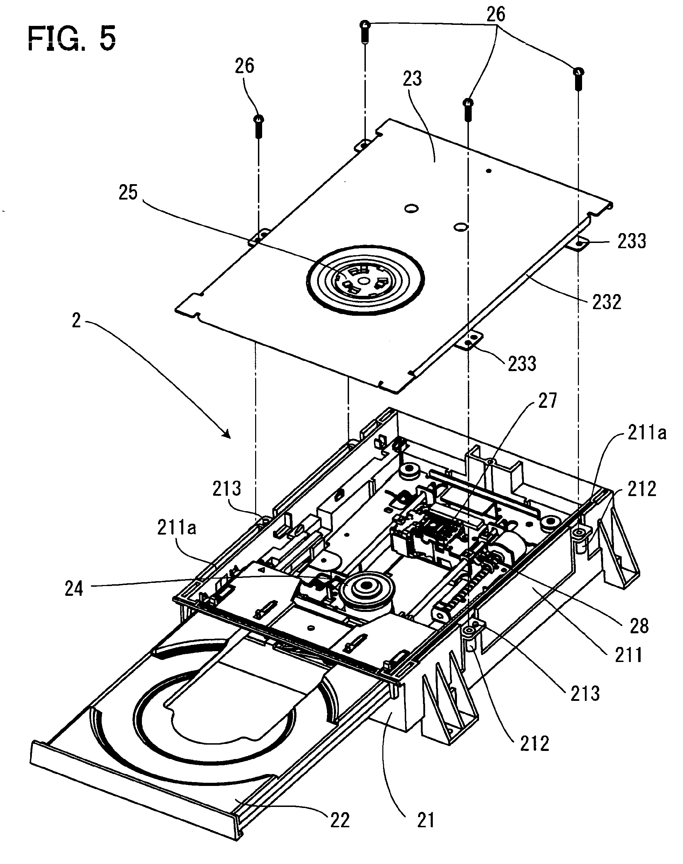

FIG. 4 is a plan view (FIG. 4A), side view (FIG. 4B) and front view (FIG. 4C) of the DVD replaying unit 2, and FIG. 5 is an exploded perspective view schematically showing the DVD replaying unit 2 with a top plate (top plate member) 23 removed. The DVD replaying unit 2 is provided with a frame 21, the whole of which is mainly made of resin, a disk tray 22 provided so as to be slidable on the frame 21 and a top plate (top plate member) 23 which covers the entire top surface of the DVD replaying unit 2. Furthermore, the DVD replaying unit 2 is also provided with a pickup unit 27 attached inside the frame 21, a pickup unit moving mechanism 28 which moves the pickup unit 27 in the radius direction of the disk medium, a turn table 24, a spindle motor (not shown) which turns the turn table 24 and a clamper 25 for holding the disk medium sandwiched between it and the turn table 24 and the like.

An engagement groove 211a is formed in a top end face of a side wall 211 of the frame 21 and boss sections 212 are formed at positions facing insertion holes 233a (which will be described later) for screws formed in lugs 233 of the top plate 23.

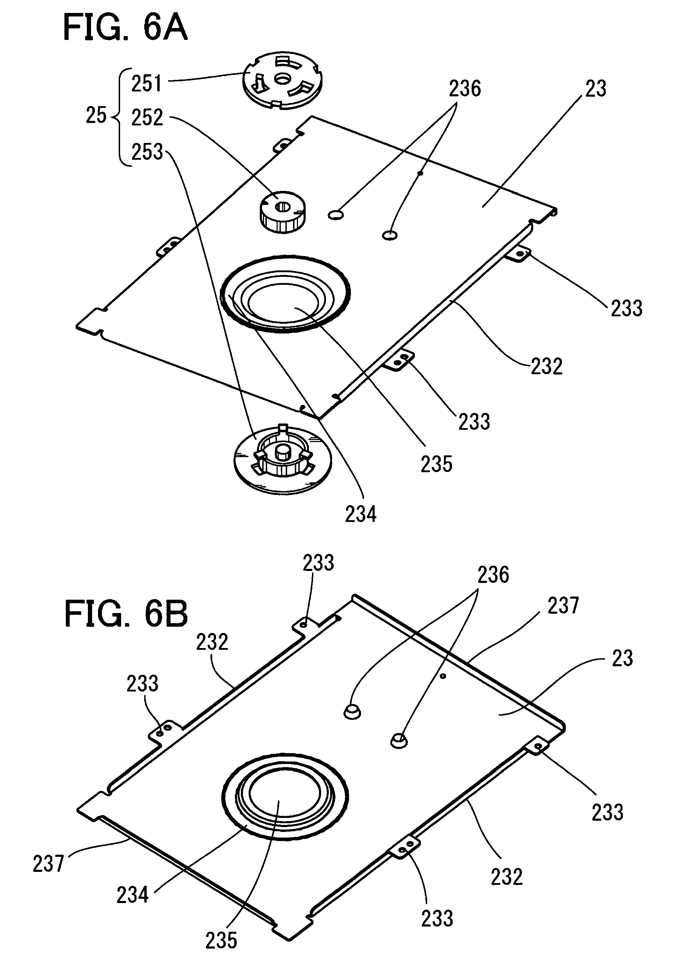

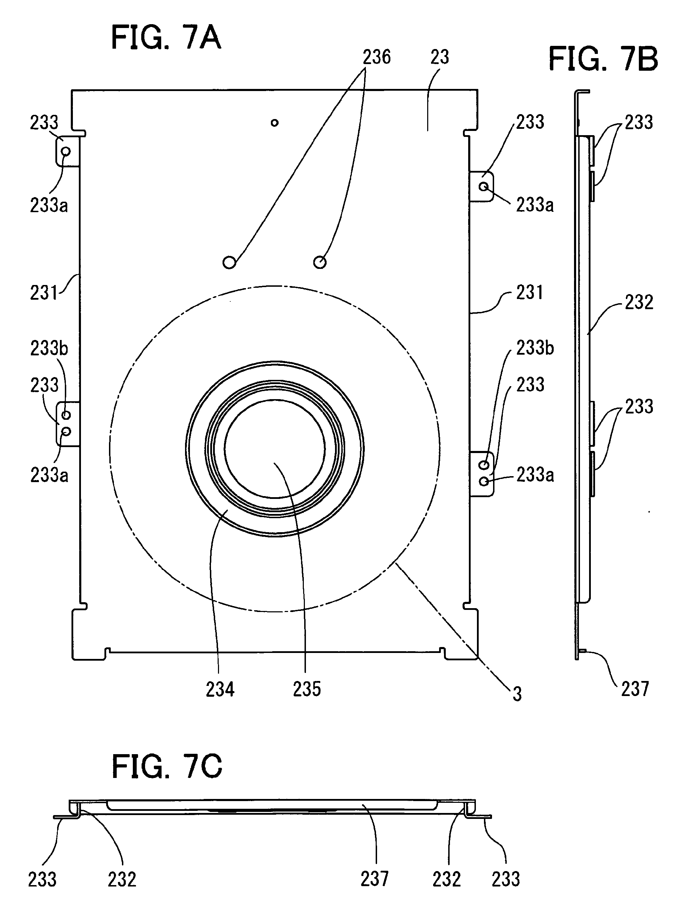

FIG. 6 and FIG. 7 schematically show the top plate 23, FIG. 6A shows an exploded perspective view with the clamper 25 removed, and 6B shows a perspective view viewed from the bottom with the clamper 25 not attached thereto. FIG. 7A shows a plan view, FIG. 7B shows a side view and FIG. 7C shows a front view. As shown in the figures, the top plate 23 is provided with bent parts 232 which are bent such that both side ends 231 have a substantially L-shaped cross section, lugs 233 which extend outward from the bottom ends of the bent parts 232 and insertion holes 233a for screws are formed in the lugs 233. Furthermore, a stepped recess 234 which swells out toward the turn table 24 is formed in a part of the top plate 23 facing the turn table 24 (part facing the turn table 24 when the top plate 23 is attached to the DVD replaying unit 2), a support hole 235 for supporting the clamper 25 for holing the disk medium sandwiched between it and the turn table 24 is provided in the stepped recess 234 and the clamper 25 is fitted into the support hole 235. A magnetic substance is attached to the surface of the turn table 24 to hold the disk medium sandwiched between it and a magnet 252 provided for the clamper 25.

Furthermore, when the side of the DVD replaying unit 2 on which the disk medium 3 is inserted/ejected is assumed to be the front side, projections 236 which swell out toward the disk medium 3 are formed at positions of the top plate 23 closer to the back than the area facing the disk medium 3 when the disk medium 3 is in a replaying position inside the DVD replaying unit 2 (disk medium 3 in a replaying position is shown with a single-dot dashed line in FIG. 7A). The bent parts 237 are formed on both the front and back of the top plate 23 in this embodiment.

As shown in FIG. 5, in the top plate 23 in the above described configuration, the bent parts 232 are engaged with engagement grooves 211a formed in the top end face of the side wall 211 of the frame 21 and fixed to the frame 21 with screws 26 fitted into boss sections 212 through insertion holes 233a whereby the top surface of the device of the DVD replaying unit 2 is covered with the top plate 23. Insertion holes 233b formed next to the insertion holes 233a are engaged with projections 213 formed next to the boss sections 212 and the top plate 23 is positioned on the frame 21 through these insertion holes 233b and projections 213. The lugs and boss sections may also be formed on the back of the device.

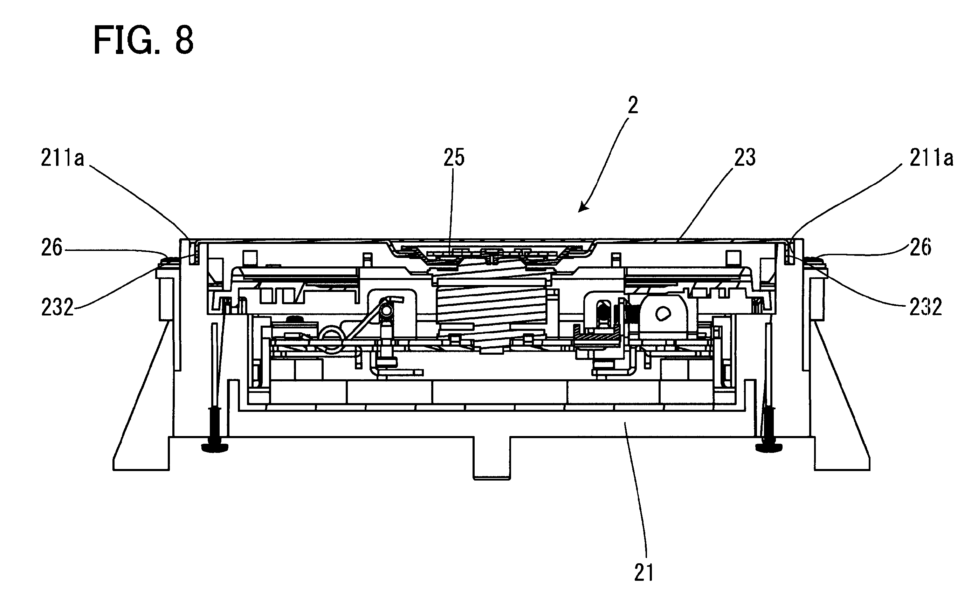

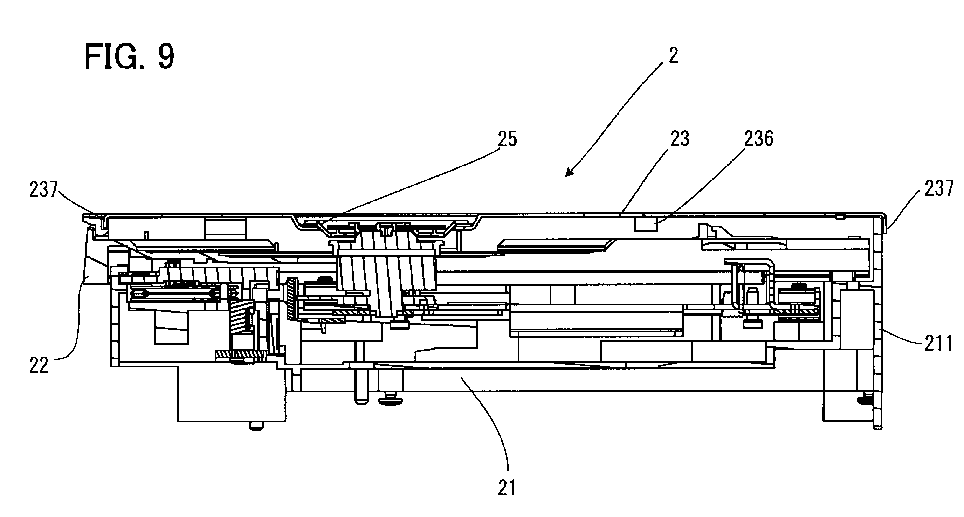

FIG. 8 is a cross sectional view along a line A-A of FIG. 3 and FIG. 9 is a cross sectional view along a line B-B. As shown in FIG. 8, engagement of the engagement grooves 211a with the bent parts 232 provides an excellent dust proofing characteristic (a convoluted structure prevents dust from entering the apparatus), and the frame 21 and top plate 23 together form the DVD replaying unit 2 into a box shape, which eliminates the necessity for providing a separate box-type cabinet or the like in addition to the frame 21, can reduce the number of parts and simplify working steps, too. Furthermore, since the frame 21 and top plate 23 together form the DVD replaying unit 2 into a box shape, the strength of the DVD replaying unit 2 is improved. In addition, as shown in FIG. 5, the top surface of the DVD replaying unit 2 is left open when the top plate 23 is removed, which provides excellent workability in assembly and maintenance.

Furthermore, as shown in FIG. 8, a stepped recess 234 is formed in the DVD replaying unit 2 of this embodiment so as to prevent the clamper 25 from protruding from the top surface of the top plate 23, and the lugs 233 and boss sections 212 are formed so as to prevent the heads of the screws 26 from protruding from the top surface of the top plate 23, which can slim the disk device. In addition, as shown in FIG. 9, the projections 236 are formed closer to the back (the back viewed from the disk insertion side) than the area facing the disk medium 3 on the inner surface side of the top plate 23, and the projections 236 prevent the disk medium 3 from going in toward the back of the disk device.

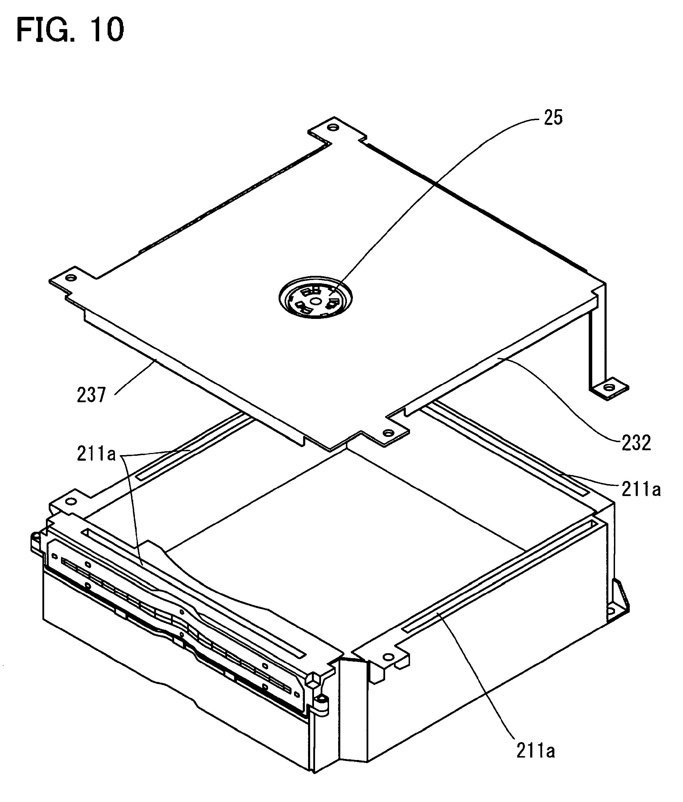

As shown in FIG. 9, this embodiment adopts a configuration whereby the bent part 237 formed on the back of the top plate 23 contacts the outside of the side wall (side wall on the back side) 211 of the frame 21, but it is also possible to form engagement grooves in the top surface of the side wall on the back side of the frame 21 so as to engage with the bent part 237. Furthermore, if the DVD replaying unit is not a "tray type" as in this embodiment but a "slot-in type" DVD replaying unit, it is possible to adopt a configuration whereby the bent part is also engaged with the engagement groove on the front side so that the bent parts are engaged with the engagement grooves on four sides as shown in FIG. 10.

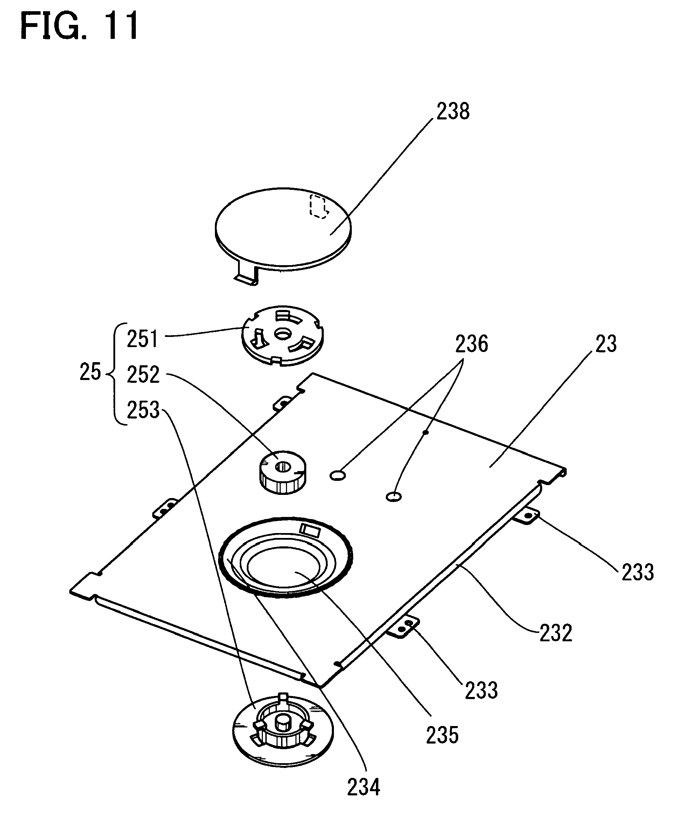

Furthermore, as shown in FIG. 11, it is also possible to adopt a configuration whereby the stepped recess 234 is covered with a cover member 238. This makes it possible to prevent dust from entering from the support hole 235 for holding the clamper 25. The cover member 238 may also be adhered to the top plate 23 using an adhesive member or the like or a locking member may be formed in the stepped recess 234 and cover member 238 (the example in FIG. 11 shows a case where hook-type locking members are formed in the cover member 238 and engagement holes are formed in the stepped recess 234) or the like to enable attachment.

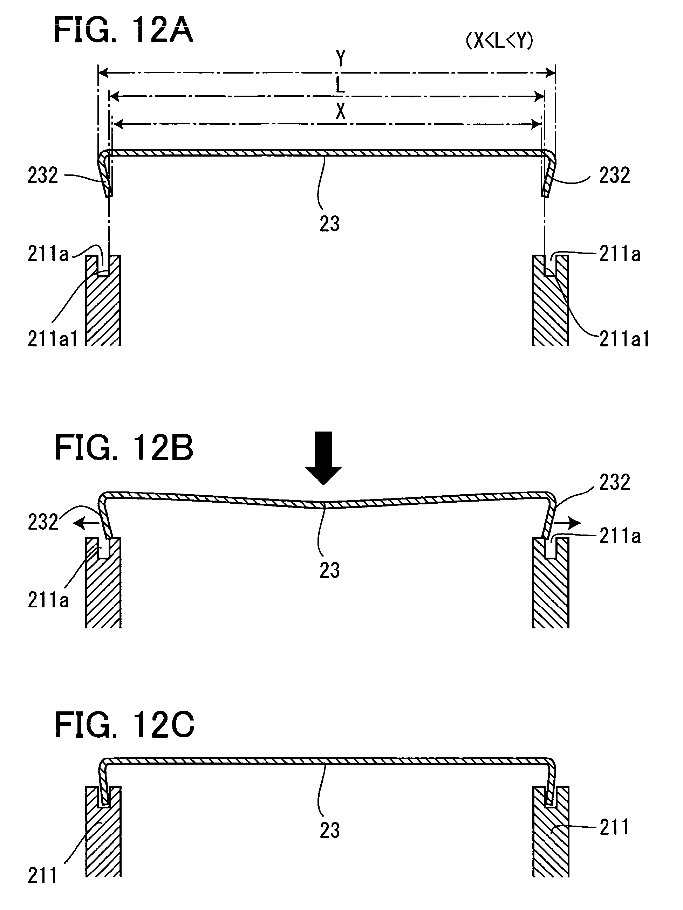

FIG. 12 illustrates conceptual explanatory views of the top plate 23 whose bent parts have a relatively large bending angle. As shown in the same figure, the top plate 23 is constructed so that a distance X between both bottom ends of the bent parts 232 of the top plate 23 (between the bottom end of the bent part 232 formed at one side end of the top plate 23 and the bottom end of the bent part 232 formed at the other side end) is smaller than a distance L (first distance) between both inner side wall surfaces 211a1 of the engagement groove 211a of the frame 21 (between inner side wall surface 211a1 of the engagement groove 211a formed on one side wall top end face of the frame 21 and inner side wall surface 211a1 of the engagement groove 211a formed on the other side wall top end face) and a distance Y between both side ends of the top plate 23 is greater than the distance L (first distance), and is also made of a member having a predetermined elastic force. When the bent parts 232 of the top plate 23 are engaged with the engagement grooves 211a of the frame 21, this makes it possible to obtain certain engagement strength and achieve a dust proofing effect (because adhesion between the inner side wall surfaces 211a1 and bottom ends of the bent parts 232 is strong as shown in FIG. 12C). Since the distance X is smaller than the distance L, it is not possible to fit the bent parts 232 into the engagement grooves 211a (attach the top plate 23 to the frame 21) in this condition, but as its concept is shown in FIG. 12B, adding a force so as to push the top plate 23 from above causes the top plate 23 to bend, which in turn causes the bottom ends of the bent parts 232 to open (so as to increase the distance X), and therefore workability of the work of attaching the top plate 23 to the frame 21 can be said to be excellent.

This embodiment provides the clamper 25 in the top plate 23 so as to eliminate the necessity for providing a member for supporting the clamper 25 separately and thereby reduce the number of parts and improve the working efficiency, but it is also possible to provide a separate member for supporting the clamper 25 and provide no stepped recess 234 (support hole 235) in the top plate 23. When the top plate 23 is provided with the clamper 25, it is necessary to ensure that the top plate 23 is fixed to the frame 21 and fixing with screws or the like (this embodiment adopts the fixing with screws 26, but other fixing means may also be used) is indispensable, but when the top plate 23 is provided with no clamper 25, it is also possible to attach the top plate 23 to the frame 21 through only the engagement strength obtained by the system as explained in FIG. 12 without forming any lugs 233 and boss sections 212 for fixing using screws.

### [Embodiment 2]

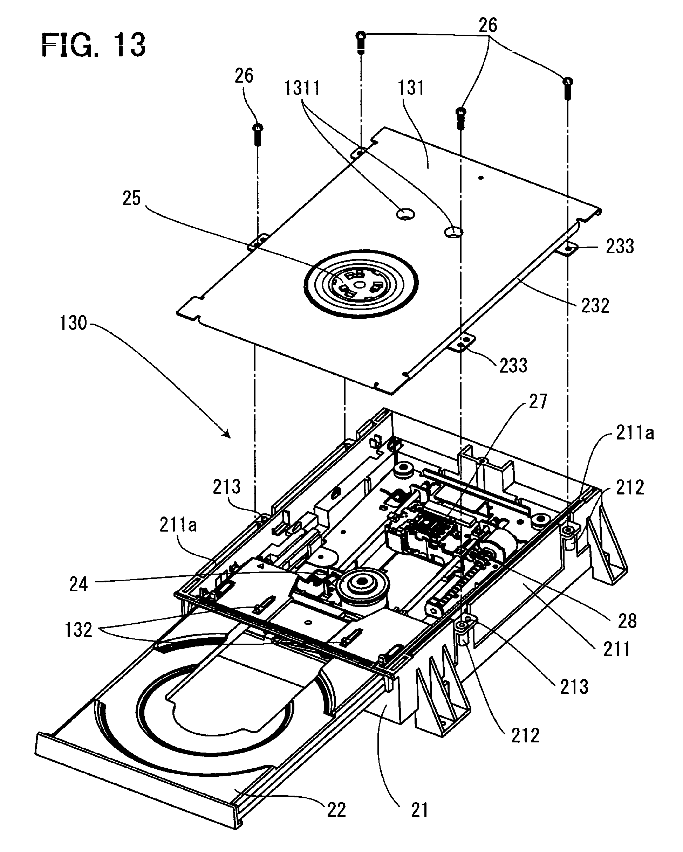

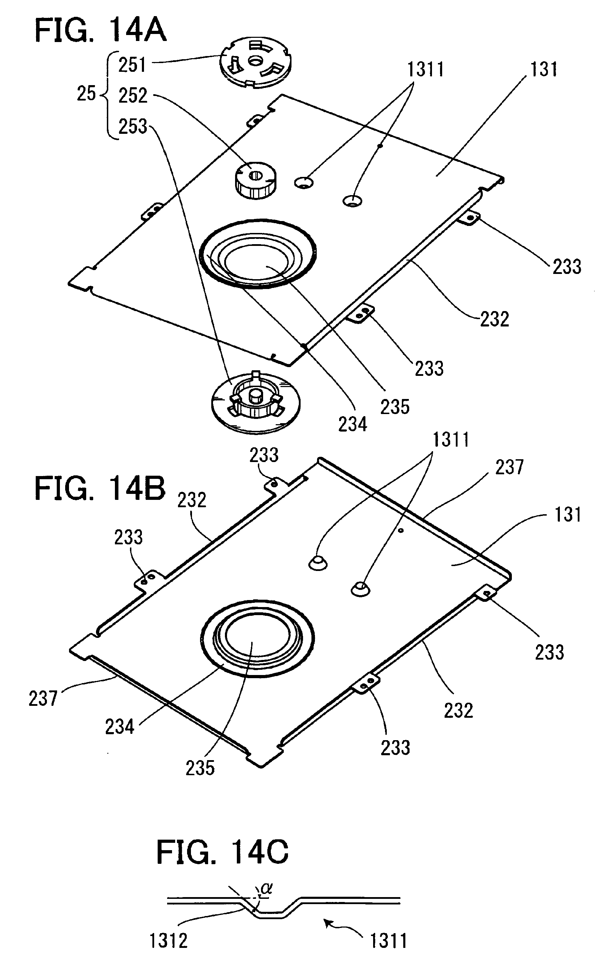

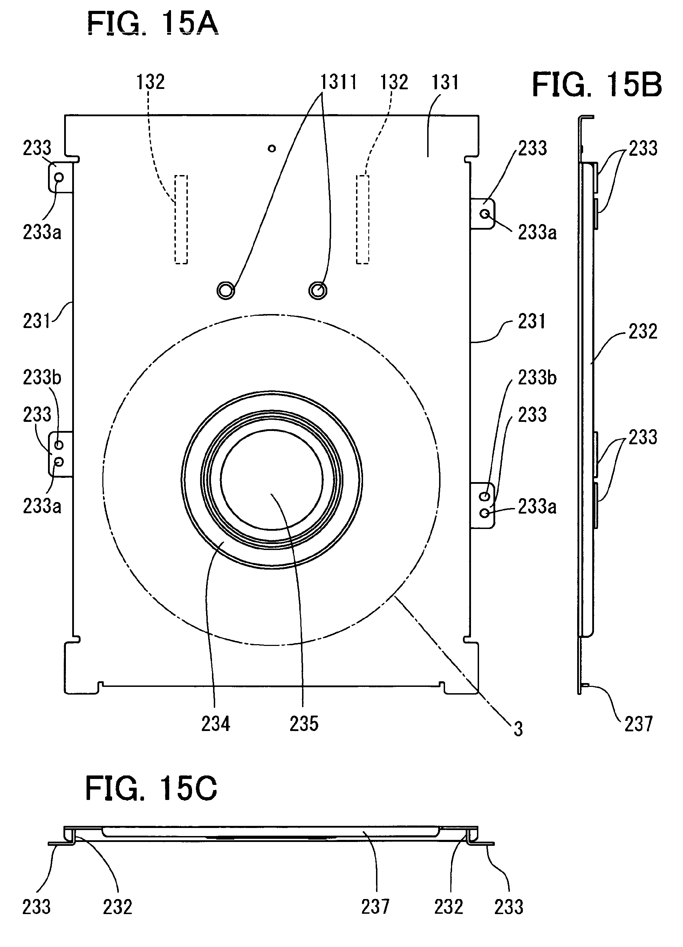

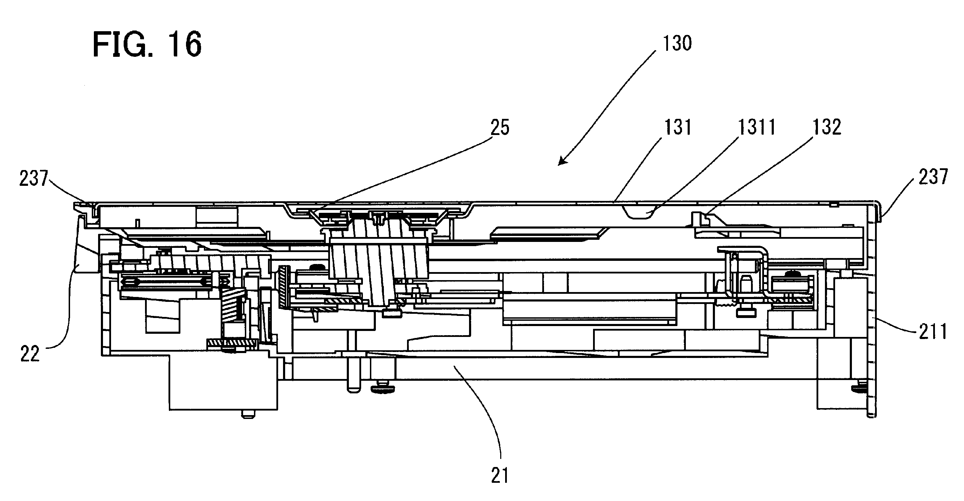

FIG. 13 is an exploded perspective view schematically showing a DVD replaying unit 130 according to this embodiment with a top plate (top plate member) removed. FIG. 14 and FIG. 15 schematically show the top plate of the DVD replaying unit, FIG. 14A is an exploded perspective view with a clamper removed, FIG. 14B is a perspective view viewed from the bottom surface when the clamper is not attached and FIG. 14C is a cross sectional view of a disk position control projection 1311. FIG. 16 is a schematic cross sectional view of the DVD replaying unit 130. The configuration of the DVD replaying unit 130 of this embodiment is basically the same except the disk position control projection 1311 formed on the top plate, and therefore components similar to those in Embodiment 1 are assigned the same reference numerals and explanations thereof will be omitted here.

In the top plate 131 provided on the DVD replaying unit 130 according to this embodiment, when the side of the DVD replaying unit 130 on which a disk medium 3 is inserted/ejected is assumed to be the front side, the disk position control projections 1311 which swell out toward the disk medium 3 are formed at positions closer to the back than the area (FIG. 15A shows the disk medium 3 at a replaying position with a single-dot dashed line) facing the disk medium 3 when the disk medium 3 is in a replaying position inside the DVD replaying unit 130. As shown in FIG. 14, the disk position control projections 1311 are tapered so as to have a slope 1312.

Furthermore, as shown in FIG. 13, disk medium stoppers 132 are formed at positions on a disk tray 22 on the disk medium mounting surface side closer to the back than positions facing the disk position control projections 1311 (FIG. 15A shows a positional relationship between the disk position control projection 1311 and disk medium stoppers 132 when the disk tray 22 is inserted). As shown in FIG. 15A, the disk position control projections 1311 and disk medium stoppers 132 are disposed in the sliding direction of the disk tray 22 (vertical direction in the figure) so as not to overlap each other (as will be described later, this is because the disk position control projections 1311 and disk medium stoppers 132 have overlapping areas in the height direction, if they overlap each other in the sliding direction, they may contact each other).

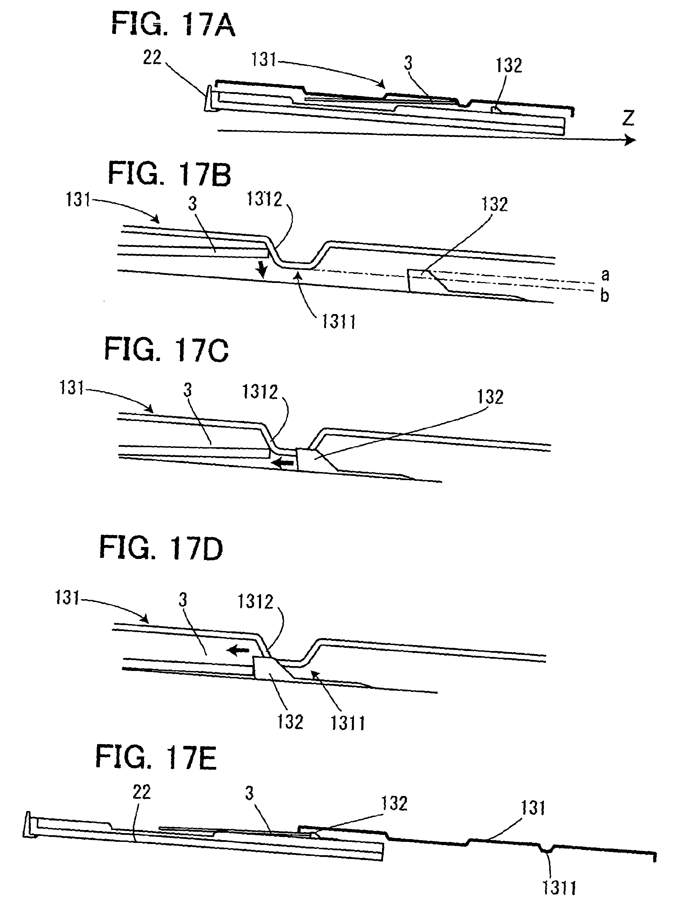

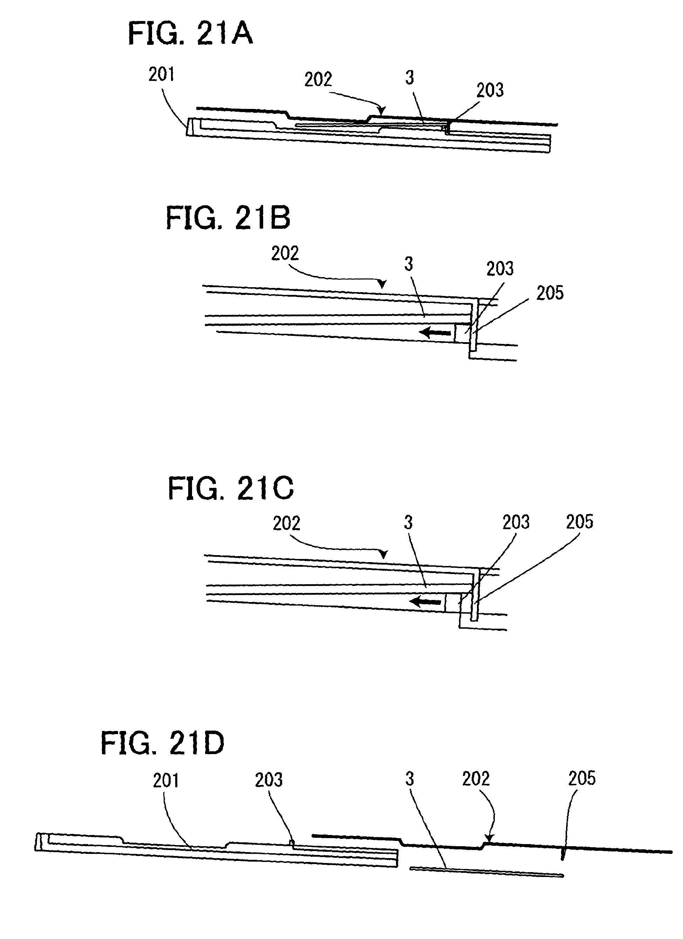

FIG. 17 is a schematic diagram illustrating an operation example when the disk tray 22 is ejected (when the disk medium 3 is drawn), FIG. 17A shows an example of a positional relationship between the disk tray 22, disk medium 3 and top plate 131 when the disk tray is housed, FIGS. 17B to D show enlarged explanatory views in the vicinity of the disk position control projection 1311 during a disk tray ejection operation and FIG. 17E shows a state in which the disk tray is ejected. As shown in the same figure, when an attempt is made to eject the disk medium 3 when the device is inclined in the depth direction (line Z in the figure indicates a horizontal line), according to the DVD replaying unit 130 of this embodiment, the disk medium 3 contacts the slope 1312 of the disk position control projection 1311 as shown in FIG. 17B, is guided toward the disk tray 22 along the inclination, reliably contacts the disk medium stopper 132 which moves simultaneously with the ejection operation of the disk tray 22 and in this way the disk medium 3 is ejected out of the device together with the disk tray 22 without being left behind inside the device. As shown in FIG. 17B, this effect is more reliably obtained since the height position (position "b" in the figure) of the end of the disk position control projection 1311 is located closer to the disk tray 22 than the height position of the end of the disk medium stopper 132 (position "a" in the figure). In contrast, in the case where a projection 205 is formed perpendicular to a top plate member 202 as shown in FIG. 21, there is no force that acts to guide a disk medium 3 toward a disk tray 201 (rather a force that holds the disk medium 3 on the top plate member 202 side may act), and a disk medium stopper 203 which moves simultaneously with the ejection operation of the disk tray 201 does not contact the disk medium 3 (does not catch the disk medium so as to draw it) and as a result the disk medium 3 may be left behind inside the device (increasing the height of the disk medium stopper 203 can prevent such a situation, but since the disk medium stopper 203 is a member moving inside the device, it must not contact other members and there are naturally limitations). As is obvious from these explanations, the angle (α in FIG. 14C) of the slope 1312 is preferably shallow and more preferably 45 degrees or below.

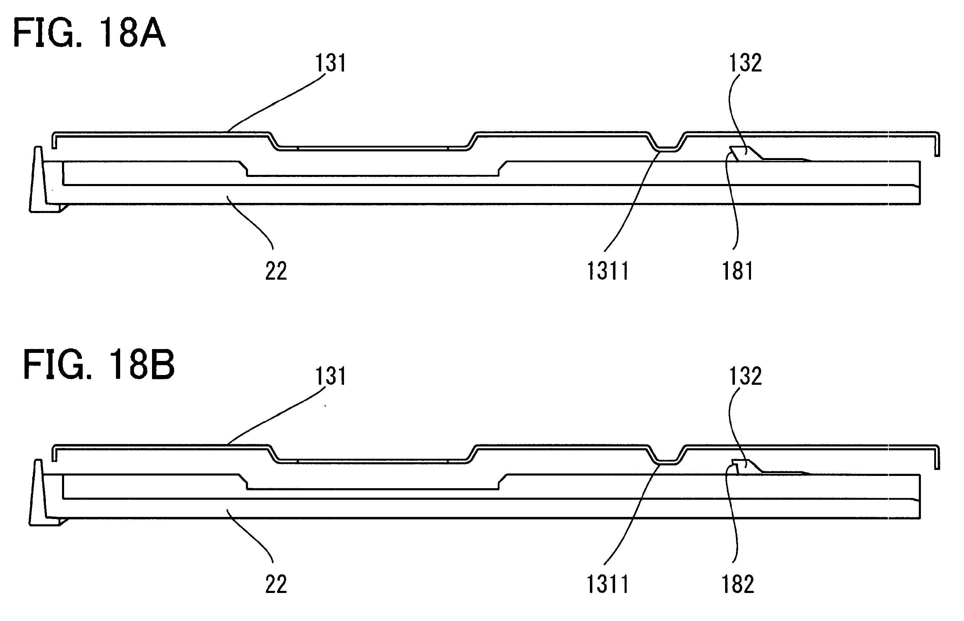

Disk medium replaying devices are used not only in the field of home appliances such as a DVD player but in a wide variety of fields such as PC and automobile, and therefore there are also various situations in which the devices are used. Thus, there is quite a high possibility that the devices may be inclined as described above and therefore the present invention is quite useful. In order for the disk medium stopper 132 to draw the disk medium 3 more reliably in the above described situation, it is also possible to form a slope 181 on the surface of the disk medium stopper 132 contacting the disk medium 3 (FIG. 18A), form a projection 182 or the like (FIG. 18B).

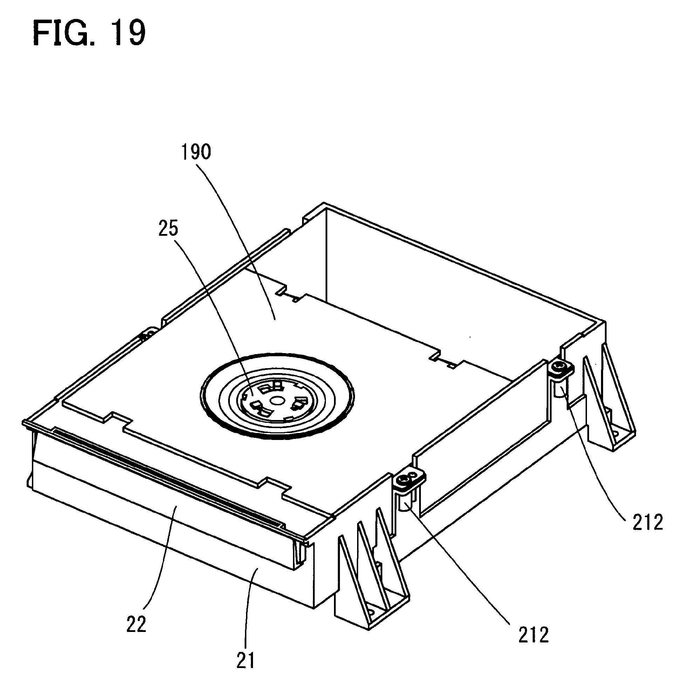

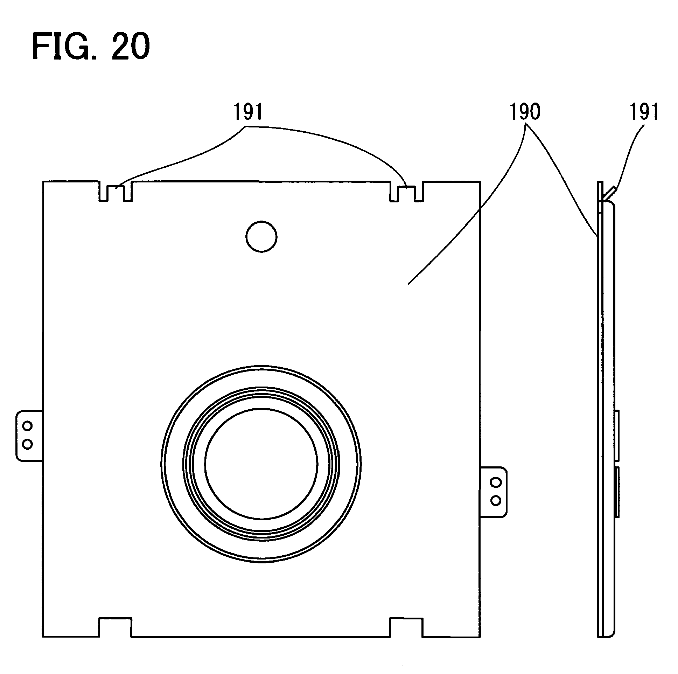

This embodiment has explained the case where the top plate 131 covers the entire top surface of the DVD replaying unit, but as shown in FIG. 19, it may also be a top plate that covers only part of the top surface. FIG. 20 shows such a top plate. As shown in the same figure, the top plate 190 has lugs formed by notching part of its ends, which are bent to form an inclined disk position control projection 191.

Furthermore, this embodiment has explained the case where two conical disk position control projections are formed as an example, but the present invention is not limited to this and the number of disk position control projections formed can be only one or three or more. The shape of the disk position control projection is not limited to the conical shape either but various shapes can be adopted according to the above described concept of the present invention (the disk position control projection may be made of a member different from the top plate member and attached thereto or the like).

This embodiment has explained a DVD replaying unit as an example of the disk device, but the present invention is not limited to this and it goes without saying that the present invention is not only applicable to a recordable DVD recording/replaying unit but also applicable to a disk device which performs replay processing on other disk media (for example, CD recording/replaying unit, LD recording/replaying unit or the like) and effectively applicable to a disk medium replaying device or disk medium recording/replaying device incorporating each of these disk devices (for example, hybrid machine such as an LCD with a built-in DVD, personal computer furnished with a disk device or the like).

The effects of the present invention are as follows.

According to the disk device according to aspect 1, which is a disk device which reads and/or writes a signal from/to a disk medium comprising a top plate member which is provided with continuous or intermittent engagement grooves in top end faces of side walls of a frame constituting an enclosure of the disk device and which covers a top surface of the disk device, wherein bent parts of the top plate member formed by bending the whole or part of both side ends so as to have a substantially L-shaped cross section are engaged with the engagement grooves to thereby cover the top surface of the device with the top plate member, the area where the frame making up the enclosure of the disk device and the top plate member are connected is constructed of the grooves (engagement grooves) engaged with the projections (bent parts), and therefore the connection area has an excellent dust proofing characteristic and the frame and top plate member together form the disk device into a box shape, no separate box-type cabinet needs to be provided in addition to the frame and it is possible to reduce the number of parts and also simplify working steps. Furthermore, since the frame and top plate member together form the disk device into a box shape, it is possible to improve the strength of the disk device.

According to the disk device according to aspect 2, which is the disk device according to aspect 1, wherein a stepped recess swelling out toward a turn table which drives to rotate a disk medium provided for the disk device is formed in an area of the top plate member facing the turn table, a support hole for supporting a clamper for holding the disk medium sandwiched with the turn table is provided in the stepped recess and the clamper is fitted into the support hole, the clamper for holding the disk medium is held by the top plate member, and therefore no separate member for holding the clamper needs to be provided and it is possible to reduce the number of parts and also simplify working steps.

According to the disk device according to aspect 4, which is the disk device according to aspect 2 or 3, wherein the stepped recess is formed such that the clamper does not protrude from the top surface of the top plate member or the lugs and the boss sections are formed such that heads of the screws do not protrude from the top surface of the top plate member, the clamper or screws for fixing the top plate member to the frame do not protrude from the top surface of the top plate member, and therefore it is possible to reduce the thickness of the disk device.

According to the disk device according to aspect 5, which is the disk device according to any one of aspects 1 to 4, wherein when the side of the disk device on which the disk medium is inserted/ejected is assumed to be the front side of the device, projections swelling out toward the disk medium are formed at positions on the top plate member closer to the back than a part facing the disk medium when the disk medium is in a replaying position inside the disk device, the projections are formed in parts of the inner surface side of the top plate member closer to the back (back viewed from the disk insertion side) than the part facing the disk medium, and therefore the projections can prevent the disk medium from going in toward the back of the disk device (e.g. , the disk goes in toward the back of the disk device in a case where a problem occurs in the clamp mechanism while the disk is rotating and the disk comes off or the disk is not clamped) .

According to the disk device according to aspect 6, which is the disk device according to any one of aspects 1 to 5, wherein the top plate member is made of an elastic member and when a distance between the inner side wall surface of the engagement groove formed in one side wall top end face of the frame and the inner side wall surface of the engagement groove formed in the other side wall top end face is assumed to be a first distance, the device is constructed such that a distance between the bottom end of the bent part formed at one side end of the top plate member and the bottom end of the bent part formed at the other side end is shorter than the first distance and at the same time a distance between both side ends of the top plate member is longer than the first distance, the distance between both bottom ends of the bent parts formed at both side ends of the top plate member is shorter than the distance (first distance) between both engagement grooves formed on both side walls of the frame and the distance between both side ends of the top plate member is longer than the distance (first distance) between both engagement grooves formed on both side walls of the frame and the top plate member is made of an elastic member. Therefore, when the bent parts of the top plate member are engaged with the engagement grooves of the frame, it is possible to obtain certain engagement strength (having engagement strength means having an adhesive force, capable of obtaining greater dust proofing effects).

According to the disk device according to aspect 7, which is a disk device which reads and/or writes a signal from/to a disk medium comprising a frame which constitutes an enclosure of the disk device, a top plate member which covers the whole or part of the top surface of the disk device and a disk tray for mounting the disk medium provided so as to be slidable on the frame, wherein when the side on which the disk medium is inserted or ejected is assumed to be the front side of the device, disk position control projections protruding toward the disk medium and having a slope to guide the disk medium toward the disk tray when contacting the disk medium are formed at positions of the top plate member closer to the back than an area facing the disk medium when the disk medium is in a replaying position inside the disk device and disk medium stoppers are formed at positions closer to the back than positions facing the disk position control projections on the disk medium mounting surface side of the disk tray, the disk position control projections having the slope to guide the disk medium toward the disk tray when contacting the disk medium are formed in parts on the inner surface side of the top plate member closer to the back (back viewed from the disk insertion side) than the area facing the disk medium in the replaying position, and therefore when the disk medium contacts the disk position control projections when the disk tray is ejected, the disk medium is guided toward the disk tray by the slopes of the disk position control projections. This ensures that the disk medium contacts the disk medium stoppers formed on the disk tray and the disk medium is ejected out of the device together with the disk tray (simultaneously with the sliding operation of the disk tray).

According to the disk device according to aspect 9, which is the disk device according to aspect 7 or 8, wherein a height position of an end of the disk position control projection is made to be substantially identical to a height position of an end of the disk medium stopper or the height position of the end of the disk position control projection is made to be closer to the disk tray than the height position of the end of the disk medium stopper, the height position of the end of the disk position control projection is closer to the disk tray than the height position of the end of the disk medium stopper or substantially identical thereto, and therefore when the disk tray is ejected, the disk medium more reliably contacts the disk medium stoppers formed on the disk tray and is ejected out of the device together with the disk tray.

## Claims

1. A disk device which reads and/or writes a signal from/to a disk medium comprising a top plate member which is provided with continuous or intermittent engagement grooves in top end faces of side walls of a frame constituting an enclosure of the disk device and which covers a top surface of the disk device,
wherein bent parts of the top plate member formed by bending the whole or part of both side ends so as to have a substantially L-shaped cross section are engaged with the engagement grooves to thereby cover the top surface of the device with the top plate member.

2. The disk device according to claim 1, wherein a stepped recess swelling out toward a turn table which drives to rotate a disk medium provided for the disk device is formed in an area of the top plate member facing the turn table, a support hole for supporting a clamper for holding the disk medium sandwiched with the turn table is provided in the stepped recess and the clamper is fitted into the support hole.

3. The disk device according to claim 1 or 2, wherein lugs protruding outward from the bottom ends of the bent parts are formed in parts of the bent parts, insertion holes for screws are formed in the lugs and boss sections are formed in the side walls of the frame so as to face the insertion holes and the top plate member is thereby fixed to the frame using screws.

4. The disk device according to claim 2 or 3, wherein the stepped recess is formed such that the clamper does not protrude from the top surface of the top plate member or the lugs and the boss sections are formed such that heads of the screws do not protrude from the top surface of the top plate member.

5. The disk device according to any one of claims 1 to 4, wherein when the side of the disk device on which the disk medium is inserted/ejected is assumed to be the front side of the device, projections swelling out toward the disk medium are formed at positions on the top plate member closer to the back than a part facing the disk medium when the disk medium is in a replaying position inside the disk device.

6. The disk device according to any one of claims 1 to 5, wherein the top plate member is made of an elastic member and when a distance between the inner side wall surface of the engagement groove formed in one side wall top end face of the frame and the inner side wall surface of the engagement groove formed in the other side wall top end face is assumed to be a first distance, the device is constructed such that a distance between the bottom end of the bent part formed at one side end of the top plate member and the bottom end of the bent part formed at the other side end is shorter than the first distance and at the same time a distance between both side ends of the top plate member is longer than the first distance.

7. A disk device which reads and/or writes a signal from/to a disk medium comprising:
a frame which constitutes an enclosure of the disk device;
a top plate member which covers the whole or part of the top surface of the disk device; and
a disk tray for mounting the disk medium provided so as to be slidable on the frame,
wherein when the side on which the disk medium is inserted or ejected is assumed to be the front side of the device, disk position control projections protruding toward the disk medium and having a slope to guide the disk medium toward the disk tray when contacting the disk medium are formed at positions of the top plate member closer to the back than an area facing the disk medium when the disk medium is in a replaying position inside the disk device and disk medium stoppers are formed at positions closer to the back than positions facing the disk position control projections on the disk medium mounting surface side of the disk tray.

8. The disk device according to any one of claims 1 to 6, further comprising a disk tray for mounting the disk medium provided so as to be slidable on the frame,
wherein when the side on which the disk medium is inserted or ejected is assumed to be the front side of the device, disk position control projections protruding toward the disk medium and having a slope to guide the disk medium toward the disk tray when contacting the disk medium are formed at positions of the top plate member closer to the back than an area facing the disk medium when the disk medium is in a replaying position inside the disk device and disk medium stoppers are formed at positions closer to the back than positions facing the disk position control projections on the disk medium mounting surface side of the disk tray.

9. The disk device according to claim 7 or 8, wherein a height position of an end of the disk position control projection is made to be substantially identical to a height position of an end of the disk medium stopper or the height position of the end of the disk position control projection is made to be closer to the disk tray than the height position of the end of the disk medium stopper.

10. A disk medium replaying device or disk medium
recording/replaying device comprising the disk device according to any one of claims 1 to 9.
